# EUROPEAN PATENT APPLICATION

(11) **EP 4 496 129 A1**
(43) Date of publication of application: **22.01.2025**
(21) Application number: 23770120.6
(22) Date of filing: 25.01.2023
(51) Int. Cl.: H01R 9/00, H01R 43/24, H01R 13/7197, H01R 13/74

(54) **TERMINAL BLOCK AND METHOD FOR MANUFACTURING SAME**

(30) Priority: 17.03.2022 JP 2022043182
(71) Applicant: Tokai Kogyo Co., Ltd., Obu-shi Aichi 474-8688 (JP)
(72) Inventor: KAWAI, Tetsuji, Obu-shi, Aichi 474-8688 (JP)
(74) Representative: J A Kemp LLP
(86) International application number: PCT/JP2023/002226
(87) International publication number: WO 2023/176158

(57) **Abstract**

A terminal block (10) includes a bus bar (12), a conductive mounting plate body (16), a chip-type capacitor component (17), and a molded resin portion (18). The chip-type capacitor component (17) is formed by bonding two chip capacitors (31, 32) in series, and one surface and another surface of the chip-type capacitor component (17) are bonded to the mounting plate body (16) and the bus bar (12), respectively. The molded resin portion (18) is injection-molded so as to cover at least a part of each of the bus bar (12), the mounting plate body (16), and the chip-type capacitor component (17) in a state in which the bus bar (12) is inserted into an insertion hole (23) of the mounting plate body (16).

## Description

### TECHNICAL FIELD

The present invention relates to a terminal block attached to an electric component case and a method for manufacturing the same.

### BACKGROUND ART

A terminal block is described in, for example, Patent Literature 1 (JP2016-072504A). This terminal block includes: a conductive bar (a bus bar) electrically connected to an electric component such as a switching power supply stored in an electric component case; a plurality of chip capacitors mounted across a first fixing portion and a second fixing portion formed by dividing a lead frame (a conductive mounting plate body); a primary molded portion configured to fix a relative position between the first fixing portion and the second fixing portion of the lead frame, and the plurality of chip capacitors; and a secondary molded portion configured to protect the conductive bar and fix the primary molded portion in a state of being attached to the conductive bar.

### CITATION LIST

### PATENT LITERATURE

Patent Literature 1: JP2016-072504A

### SUMMARY OF INVENTION

### TECHNICAL PROBLEM

In the above configuration, it is necessary to mold the primary molded portion and the secondary molded portion in separate molding steps, and two types of molding molds are required, and the molding steps are two steps.

An object of the present invention is to provide a terminal block that can be molded in one step using one type of molding mold and can contribute to reduction in production cost and improvement in productivity, and a method for manufacturing the same.

### SOLUTION TO PROBLEM

According to the present invention, there is provided a terminal block configured to be attached to an electric component case, the terminal block including:
a bus bar having a plate shape, the bus bar being configured to be inserted into a through hole formed in the electric component case and to be electrically connected to an electric component stored in the electric component case;
a conductive mounting plate body formed with an insertion hole into which the bus bar is inserted, the conductive mounting plate body being configured to close the through hole of the electric component case when the terminal block is attached to the electric component case; and
at least one chip-type capacitor component electrically connected between the bus bar and the mounting plate body, in which:
   one surface and another surface of the chip-type capacitor component are bonded to the mounting plate body and the bus bar, respectively; and
   a molded resin portion is provided, the molded resin portion being configured to cover at least a part of each of the bus bar, the mounting plate body, and the chip-type capacitor component, in a state in which the bus bar is inserted into the insertion hole of the mounting plate body.

In this configuration, relative positions of the chip-type capacitor component, the mounting plate body, and the bus bar are fixed by bonding the one surface and the other surface of the chip-type capacitor component to the mounting plate body and the bus bar, respectively. Consequently, a molded resin portion corresponding to a primary molded portion of the related art configured to fix the relative positions of the chip-type capacitor component and the mounting plate body is not required, and the terminal block can be configured such that the molded resin portion of the terminal block is only the molded resin portion configured to cover at least a part of each of the bus bar, the mounting plate body, and the chip-type capacitor component. Therefore, it is possible to mold the molded resin portion of the terminal block in one step using one type of molding mold, thereby contributing to reduction in production cost and improvement in productivity.

In this case, the chip-type capacitor component may include only one chip capacitor, but the chip-type capacitor component may be formed by bonding two or more chip capacitors in series, one surface of one chip capacitor may be bonded to the mounting plate body, and another surface of another chip capacitor may be bonded to the bus bar. When two or more chip capacitors are bonded in series to form one chip-type capacitor component, even when the one chip capacitor deteriorates or fails, a function of a circuit can be maintained by another chip capacitor connected in series, and redundancy can be ensured.

According to the present invention, a plurality of chip-type capacitor components may be connected in parallel between the bus bar and the mounting plate body. Even when the one chip-type capacitor component is insufficient in capacity, if the plurality of chip-type capacitor components are connected in parallel, a required capacity can be ensured.

A mounting hole for attaching the terminal block to the electric component case may be formed in the mounting plate body. In this way, it is possible to omit an operation of forming the mounting hole in the molded resin portion and preparation of another component for attaching the terminal block to the electric component case.

According to the present invention, the molded resin portion may be made of a high thermal conductive resin. In this way, heat generated in the bus bar can be efficiently radiated to the outside air through the molded resin portion.

In a case in which the terminal block according to the present invention is manufactured, the terminal block may be manufactured by a manufacturing method including: a preparation step of preparing an assembly in which the bus bar is inserted into the insertion hole of the mounting plate body, the chip-type capacitor component is electrically connected between the bus bar and the mounting plate body, and the one surface and the another surface of the chip-type capacitor component are bonded to the bus bar and the mounting plate body, respectively; and a molding step of molding the molded resin portion by setting the assembly in a molding mold. Here, the preparation step for preparing the assembly may be performed such that a manufacturer who performs the molding step merely obtains an assembly assembled by a different manufacturer.

In a case in which a manufacturer who performs the molding step assembles the assembly, the terminal block may be manufactured by a manufacturing method including: a step of bonding the one surface of the chip-type capacitor component to the mounting plate body to electrically connect one electrode of the chip-type capacitor component to the mounting plate body; a step of assembling an assembly by inserting the bus bar into the insertion hole of the mounting plate body and bonding the another surface of the chip-type capacitor component to the bus bar to electrically connect another electrode of the chip-type capacitor component to the bus bar; and a molding step of molding the molded resin portion by setting the assembly in a molding mold.

Alternatively, by reversing a bonding order of the one surface and the another surface of the chip-type capacitor component, the terminal block may be manufactured by a manufacturing method including: a step of bonding the another surface of the chip-type capacitor component to the bus bar to electrically connect another electrode of the chip-type capacitor component to the bus bar; a step of assembling an assembly by inserting the bus bar into the insertion hole of the mounting plate body and bonding the one surface of the chip-type capacitor component to the mounting plate body to electrically connect one electrode of the chip-type capacitor component to the mounting plate body; and a molding step of molding the molded resin portion by setting the assembly in a molding mold.

In a case in which two or more chip capacitors are bonded in series to assemble the chip-type capacitor component, the chip-type capacitor component may be assembled in a final step of assembling the assembly.

Specifically, the terminal block may be manufactured by a manufacturing method including: a step of bonding the one surface of the one chip capacitor to the mounting plate body to electrically connect one electrode of the one chip capacitor to the mounting plate body; a step of bonding the another surface of the another chip capacitor to the bus bar to electrically connect another electrode of the another chip capacitor to the bus bar; a step of assembling an assembly by inserting the bus bar into the insertion hole of the mounting plate body and bonding the another electrode of the one chip capacitor and one electrode of the another chip capacitor with the two electrodes facing each other (the chip-type capacitor component is assembled in this step); and a molding step of molding the molded resin portion by setting the assembly in a molding mold.

On the other hand, in a case in which the chip-type capacitor component is assembled in a first step of assembling the assembly, the terminal block may be manufactured by a manufacturing method including: a step of assembling the chip-type capacitor component by bonding the two or more chip capacitors in series; a step of bonding the one surface of the chip-type capacitor component to the mounting plate body to electrically connect one electrode of the chip-type capacitor component to the mounting plate body; a step of assembling an assembly by inserting the bus bar into the insertion hole of the mounting plate body and bonding the another surface of the chip-type capacitor component to the bus bar to electrically connect another electrode of the chip-type capacitor component to the bus bar; and a molding step of molding the molded resin portion by setting the assembly in a molding mold.

Alternatively, by reversing a bonding order of the one surface and the another surface of the chip-type capacitor component, the terminal block may be manufactured by a manufacturing method including: a step of assembling the chip-type capacitor component by bonding the two or more chip capacitors in series; a step of bonding the another surface of the chip-type capacitor component to the bus bar to electrically connect another electrode of the chip-type capacitor component to the bus bar; a step of assembling an assembly by inserting the bus bar into the insertion hole of the mounting plate body and bonding the one surface of the chip-type capacitor component to the mounting plate body to electrically connect one electrode of the chip-type capacitor component to the mounting plate body; and a molding step of molding the molded resin portion by setting the assembly into a molding mold.

Solder having a melting point of 200°C or higher may be used as a bonding material for bonding the chip-type capacitor component to the bus bar and the mounting plate body. In this way, it is possible to prevent the bonding material bonding the chip-type capacitor component from softening and melting due to heat when the molded resin portion is molded, thereby preventing deviation of the position of the chip-type capacitor component or peeling off of the chip-type capacitor component.

### BRIEF DESCRIPTION OF DRAWINGS

[FIG. 1] FIG. 1 is an exploded perspective view illustrating a state in which a terminal block is removed from an electric component case according to a first embodiment.
[FIG. 2] FIG. 2 is a perspective view of the terminal block according to the first embodiment.
[FIG. 3] FIG. 3 is a perspective view of a mounting plate body according to the first embodiment.
[FIG. 4] FIG. 4 is a perspective view illustrating a state in which a first chip capacitor is bonded to the mounting plate body according to the first embodiment.
[FIG. 5] FIG. 5 is a perspective view of a bus bar according to the first embodiment.
[FIG. 6] FIG. 6 is a perspective view illustrating a state in which second chip capacitors are bonded to the bus bar according to the first embodiment.
[FIG. 7] FIG. 7 is a perspective view of an assembly according to the first embodiment.
[FIG. 8] FIG. 8 is a perspective view of a chip-type capacitor component illustrating a manufacturing method according to a second embodiment.
[FIG. 9] FIG. 9 is a perspective view of a mounting plate body according to the second embodiment.
[FIG. 10] FIG. 10 is a perspective view illustrating a state in which a chip-type capacitor component is bonded to the mounting plate body according to the second embodiment.
[FIG. 11] FIG. 11 is a perspective view illustrating a state in which a coupling portion of the mounting plate body to which the chip-type capacitor component according to second embodiment is bonded is divided.
[FIG. 12] (a) and (b) of FIG. 12 are plan views illustrating a mounted state of the chip-type capacitor component according to the second embodiment, in which (a) illustrates a state before the coupling portion is divided, and (b) illustrates a state after the coupling portion is divided.
[FIG. 13] FIG. 13 is a perspective view illustrating a method for assembling an assembly according to the second embodiment.
[FIG. 14] FIG. 14 is a sectional view of an assembly illustrating a method for assembling an assembly according to a third embodiment.

### DESCRIPTION OF EMBODIMENTS

Hereinafter, several embodiments embodying the present invention will be described.

### FIRST EMBODIMENT

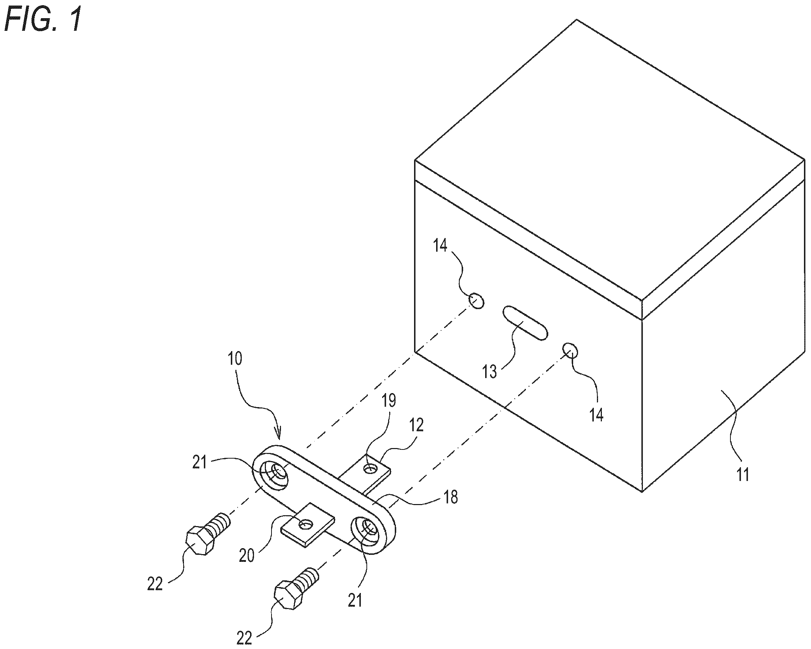

First, a configuration of a terminal block 10 according to a first embodiment of the present invention will be described with reference to FIGS. 1 to 7.

In an electric component case 11 to which the terminal block 10 is attached, for example, a power supply device such as a DC-DC converter, a power distribution device, a control device, and an electric component (not illustrated) that supplies a large amount of current such as a battery are stored. A through hole 13 into which a plate-shaped bus bar 12 electrically connected to an electric component in the electric component case 11 is inserted is formed in a front wall of the electric component case 11, and bolt insertion holes 14 for attaching the terminal block 10 are formed at predetermined positions on both left and right sides sandwiching the through hole 13.

The terminal block 10 includes the bus bar 12, a conductive mounting plate body 16, chip-type capacitor components 17, a molded resin portion 18, and the like. The bus bar 12 is formed of a highly conductive metal plate such as a copper plate. A portion of the bus bar 12 to be inserted into the through hole 13 of the electric component case 11 is formed with a bolt insertion hole 19 for electrically connecting to a connection portion of the electric component in the electric component case 11 by tightening a bolt. A bolt insertion hole 20 for electrically connecting to a connection portion of an electrical device (not illustrated) to be electrically connected to an electric component in the electric component case 11 by tightening a bolt is formed at a predetermined position on a front side of the bus bar 12.

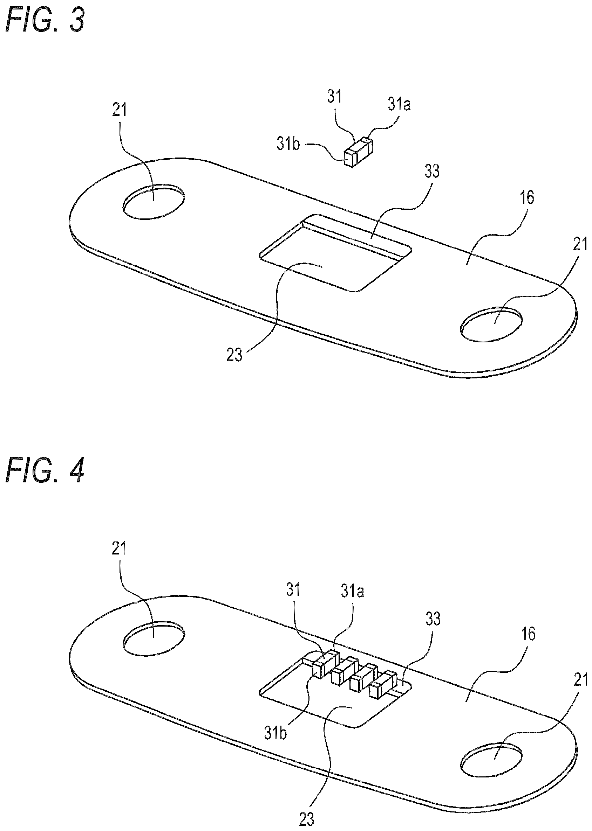

The mounting plate body 16 is formed into a predetermined shape by pressing a highly conductive metal plate such as a copper plate or SUS. As illustrated in FIGS. 3, 4, and 7, an insertion hole 23 into which the bus bar 12 is inserted is formed in a substantially central portion of the mounting plate body 16, and mounting holes 21 for attaching the terminal block 10 to the electric component case 11 are formed on both left and right sides of the mounting plate body 16. When the terminal block 10 is attached to the electric component case 11, the two mounting holes 21 of the mounting plate body 16 are aligned with the two bolt insertion holes 14 of the electric component case 11, and two bolts 22 are inserted into the mounting holes 21 and the bolt insertion holes 14 and tightened with nuts or the like. Alternatively, a thread groove may be formed in an inner peripheral edge of the bolt insertion hole 14 of the electric component case 11, and the bolt 22 may be tightened into the bolt insertion hole 14.

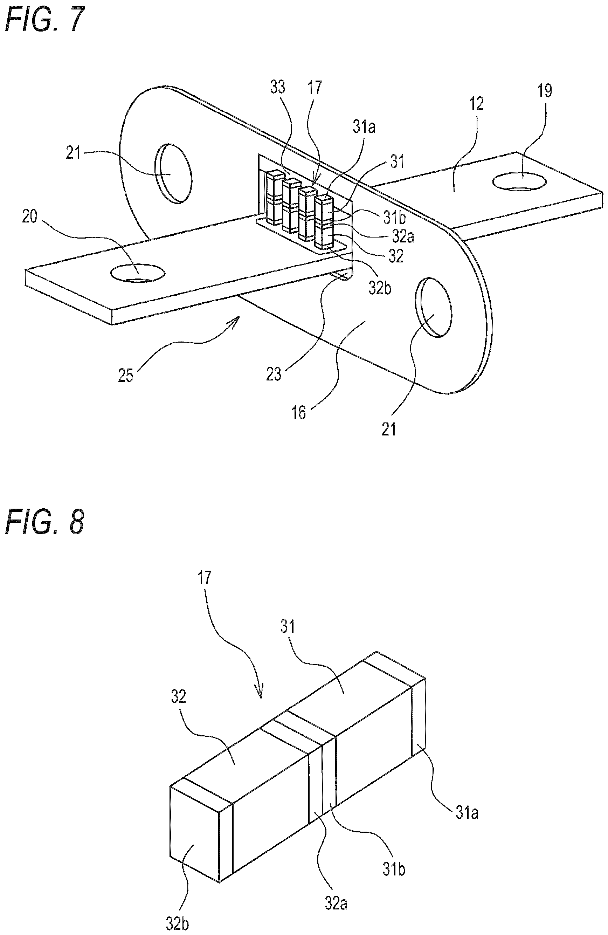

As illustrated in FIG. 7, the chip-type capacitor component 17 is formed by bonding two chip capacitors 31 and 32 in series. In each of the chip capacitors 31 and 32, a chip capacitor having a rectangular parallelepiped (hexahedral) shape such as a multilayer ceramic chip capacitor having the same size is used, and electrodes 31a, 31b, 32a, and 32b are respectively provided at both end portions in a longitudinal direction of the chip capacitors 31 and 32 (see FIGS. 3 to 6). The electrodes 31a, 31b, 32a, and 32b are respectively formed so as to cover entire surfaces of both end surfaces of the chip capacitors 31 and 32 in the longitudinal direction and both end portions of four side surfaces thereof. In the first embodiment, in order to increase a capacitor capacity, a plurality of (for example, four) chip-type capacitor components 17 are connected in parallel between the bus bar 12 and the mounting plate body 16. As a result, an electrical noise transmitted from the electric component in the electric component case 11 to the bus bar 12 is released in a ground path of the bus bar 12, the chip-type capacitor component 17, the mounting plate body 16, the bolt 22, and the electric component case 11.

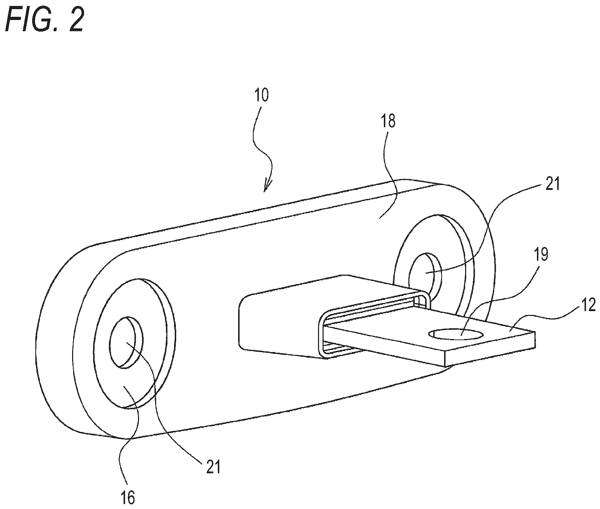

As illustrated in FIG. 2, the molded resin portion 18 is injection-molded so as to cover at least part of the bus bar 12, the mounting plate body 16, and the chip-type capacitor component 17 in a state in which the bus bar 12 is inserted into the insertion hole 23 of the mounting plate body 16. The bolt insertion holes 19 and 20 of the bus bar 12 and the mounting hole 21 of the mounting plate body 16 are not covered with the molded resin portion 18 and are exposed. The resin for molding the molded resin portion 18 is made of a high thermal conductive resin (for example, a PPS resin, a PA resin, a PBT resin, or a PC resin having high thermal conductivity), and the heat generated in the bus bar 12 through which a large current flows can be efficiently radiated to the outside air through the molded resin portion 18.

Next, a method for manufacturing the terminal block 10 having the above configuration will be described.

In the outline of the manufacturing method according to the first embodiment, one chip capacitor 31 (hereinafter referred to as "first chip capacitor 31") and the other chip capacitor 32 (hereinafter referred to as "second chip capacitor 32") of the two chip capacitors 31 and 32 constituting the chip-type capacitor component 17 are separately bonded to the mounting plate body 16 and the bus bar 12, by a step of inserting the bus bar 12 into the insertion hole 23 of the mounting plate body 16 to assemble an assembly 25 (see FIG. 7), the two chip capacitors 31 and 32 are bonded to assemble the chip-type capacitor component 17. Hereinafter, the manufacturing method according to the first embodiment will be described in detail.

First, in a step (1), as illustrated in FIG. 3, cream solder, which is a bonding material for bonding the first chip capacitor 31, is applied to a capacitor bonding region 33 provided along a linear outer edge of the insertion hole 23 of the mounting plate body 16 by a dispenser or the like. As the cream solder to be applied, cream solder having a melting point of 200°C or higher, which is higher than usual solder (melting point 180°C), for example, lead-free solder (melting point 220°C to 230°C) is used. The capacitor bonding region 33 of the mounting plate body 16 may be formed in a shape (for example, a concave shape) that allows positioning of bonding positions of a plurality of (for example, four) first chip capacitors 31 or identification of an application range of solder.

In the next step (2), a portion including one electrode 31a on one surface of the first chip capacitor 31 is mounted in the capacitor bonding region 33 of the mounting plate body 16 using a component mounting machine or the like. In the first embodiment, as illustrated in FIG. 4, the plurality of first chip capacitors 31 are mounted in parallel. At this time, in order to prevent adjacent first chip capacitors 31 from coming into contact with each other, the plurality of first chip capacitors 31 may be mounted at equal pitches with a gap therebetween using a jig (not illustrated) for ensuring a gap between the adjacent first chip capacitors 31. By ensuring the gap between the first chip capacitors 31, the adjacent first chip capacitors 31 can be insulated from each other, and the heat can be efficiently transferred to the solder by easily passing hot air for reflow of the subsequent steps (3) and (8).

In the next step (3), the cream solder in a mounting portion of the first chip capacitor 31 is heated by hot air, laser, or the like and reflowed to bond the portion including the one electrode 31a on the one surface of the first chip capacitor 31 to the capacitor bonding region 33 of the mounting plate body 16, and the one electrode 31a is electrically connected to the mounting plate body 16.

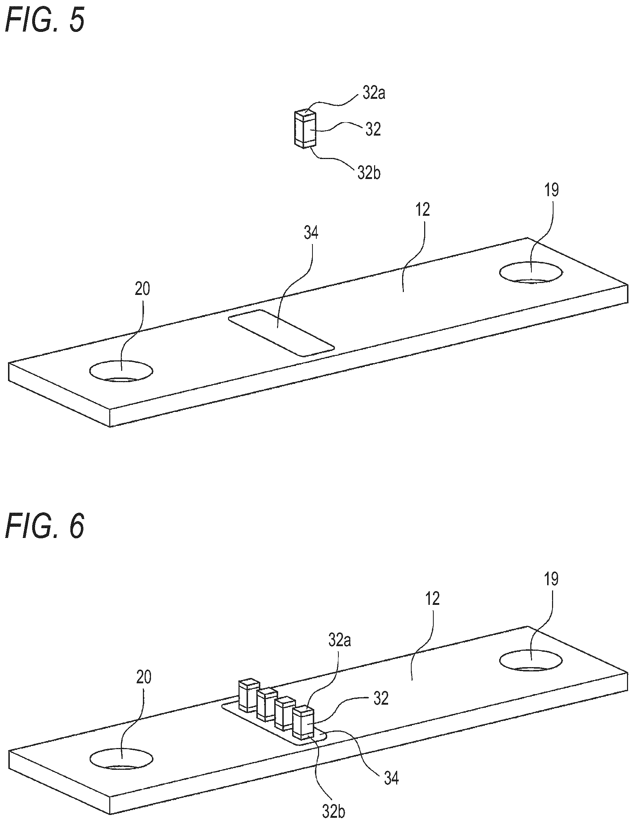

In the next step (4), as illustrated in FIG. 5, the cream solder, which is a bonding material for bonding the second chip capacitor 32, is applied to the capacitor bonding region 34 of the bus bar 12 by a dispenser or the like. The cream solder to be applied is the same as the cream solder to which the first chip capacitor 31 is bonded. The capacitor bonding region 34 of the bus bar 12 may be formed in a shape (for example, a concave shape) that allows positioning of the bonding position of a plurality of (for example, four) second chip capacitors 32 or identification of an application range of solder.

In the next step (5), a portion including the other electrode 32b on the other surface of the second chip capacitor 32 is mounted in the capacitor bonding region 34 of the bus bar 12 using a component mounting machine or the like. In this case, the other surface of the second chip capacitor 32 is entirely covered with the other electrode 32b, and the second chip capacitor 32 is mounted in a state in which the second chip capacitor 32 is erected in the capacitor bonding region 34 with the other electrode 32b facing downward. In the first embodiment, as illustrated in FIG. 6, a plurality of (for example, four) second chip capacitors 32 are mounted in parallel. At this time, in order to prevent adjacent second chip capacitors 32 from coming into contact with each other, the plurality of second chip capacitors 32 may be mounted at equal pitches with a gap therebetween using a jig (not illustrated) for ensuring a gap between the adjacent second chip capacitors 32. At this time, an arrangement pitch of the second chip capacitors 32 is also the same as an arrangement pitch of the first chip capacitors 31.

In the next step (6), the cream solder in mounting portions of the plurality of second chip capacitors 32 is heated by hot air, laser, or the like and reflowed to bond the other electrodes 32b, which are the other surfaces of the plurality of second chip capacitors 32, to the capacitor bonding region 34 of the bus bar 12, and the other electrodes 32b are electrically connected to the bus bar 12.

Note that the order of the steps (1) to (3) and the steps (4) to (6) may be reversed, and the steps (4) to (6) may be performed, and then the steps (1) to (3) may be performed. Alternatively, after the two cream solder application steps (1) and (4) are collectively performed, the two mounting steps (2) and (5) may be collectively performed, and then the two reflow steps (3) and (6) may be collectively performed.

After the steps (1) to (6) are performed as described above, the process proceeds to the cream solder application step (7), and the same cream solder as that used in the previous steps (1) and (4) is applied to the other (unconnected) electrode 31b of the first chip capacitor 31 bonded to the mounting plate body 16 by a dispenser or the like. Similarly, the same cream solder is applied to one (not connected) electrode 32a of the second chip capacitor 32 bonded to the bus bar 12 by a dispenser or the like. The process may proceed to the next assembly step (8) without applying the cream solder of either the electrode 31b of the first chip capacitor 31 or the electrode 32a of the second chip capacitor 32.

In the next assembly step (8), as illustrated in FIG. 7, the bus bar 12 is inserted into the insertion hole 23 of the mounting plate body 16, and the other electrodes 31b of the plurality of first chip capacitors 31 and the one electrodes 32a of the plurality of second chip capacitors 32 are made to face each other to bring the cream solder application portions of the electrodes 31b and 32a into contact with each other. In this state, the cream solder application portions of both electrodes 31b and 32a are heated by hot air, laser, or the like and reflowed, and both electrodes 31b and 32a are bonded to assemble the assembly 25. In the assembly step (8), the plurality of first chip capacitors 31 and the plurality of second chip capacitors 32 are connected in series to assemble the plurality of chip-type capacitor components 17, and the plurality of chip-type capacitor components 17 are connected in parallel between the bus bar 12 and the mounting plate body 16.

Thereafter, the process proceeds to a molding step (9), the assembly 25 is set in a molding mold (not illustrated), and a molding material of a high thermal conductive resin (for example, a PPS resin, a PA resin, a PBT resin, or a PC resin having high thermal conductivity) is injected into the mold to injection-mold the molded resin portion 18. However, at least a part of each of the bus bar 12, the mounting plate body 16, and the plurality of chip-type capacitor component 17 is covered with the molded resin portion 18, but the bolt insertion holes 19 and 20 of the bus bar 12 and the mounting hole 21 of the mounting plate body 16 are not covered with the molded resin portion 18 and are exposed. Through the molding step (9), the terminal block 10 is completed. Before injection molding of the molded resin portion 18, a bolt (not illustrated) may be assembled into the bolt insertion hole 20 of the bus bar 12, and then the molded resin portion 18 may be injection-molded.

In the terminal block 10 according to the first embodiment described above, since the relative positions of the chip-type capacitor component 17, the mounting plate body 16, and the bus bar 12 are fixed by respectively bonding the one surface and the other surface of the chip-type capacitor component 17 to the mounting plate body 16 and the bus bar 12, a molded resin portion corresponding to a primary molded portion of the related art that fixes the relative positions of the chip-type capacitor component 17 and the mounting plate body 16 is not required, and the terminal block 10 can be configured such that the molded resin portion 18 of the terminal block 10 is only the molded resin portion 18 that covers at least a part of each of the bus bar 12, the mounting plate body 16, and the chip-type capacitor component 17. This makes it possible to mold the molded resin portion 18 of the terminal block 10 in one step using one type of molding mold, thereby contributing to reduction in production cost and improvement in productivity.

Since the chip-type capacitor component 17 is formed by bonding the two chip capacitors 31 and 32 in series, the one surface of the first chip capacitor 31, which is one chip capacitor, is bonded to the mounting plate body 16, and the other surface of the second chip capacitor 32, which is the other chip capacitor, is bonded to the bus bar 12, even when either the first chip capacitor 31 or the second chip capacitor 32 deteriorates or fails, a function of an electrical noise reduction circuit can be maintained by the other chip capacitors connected in series, and redundancy can be ensured.

Three or more chip capacitors may be connected in series to form the chip-type capacitor components 17.

In the first embodiment, since the plurality of chip-type capacitor components 17 are connected in parallel between the bus bar 12 and the mounting plate body 16, even if one chip-type capacitor component 17 is insufficient in capacity, a required capacity can be ensured.

Since the mounting hole 21 for attaching the terminal block 10 to the electric component case 11 is formed in the mounting plate body 16, it is possible to omit an operation of forming the mounting hole in the molded resin portion 18 and the preparation of another component for attaching the terminal block 10 to the electric component case 11.

In the first embodiment, since the cream solder having a melting point of 200°C or higher is used as the bonding material for bonding the chip-type capacitor component 17 to the bus bar 12 and the mounting plate body 16, it is possible to prevent the bonding material that bonds the chip-type capacitor component 17 from softening and melting due to the heat generated during the injection molding of the molded resin portion 18, thereby preventing poor contact due to deviation of the position of the chip-type capacitor component 17 or peeling off of the chip-type capacitor component 17.

### SECOND EMBODIMENT

Next, a second embodiment according to the present invention will be described with reference to FIGS. 8 to 13. However, substantially the same portions as those of the first embodiment are denoted by the same reference numerals, and the description thereof will be simplified or omitted, and different portions will be mainly described.

In the manufacturing method according to the first embodiment, the chip-type capacitor component 17 is assembled by bonding the two chip capacitors 31 and 32 in series in the final step of assembling the assembly 25, but in the manufacturing method according to the second embodiment, in the first step of assembling the assembly 25, two chip capacitors 31 and 32 are bonded in series to assemble the chip-type capacitor component 17. Hereinafter, the manufacturing method according to the second embodiment will be described in detail.

First, in step (1), as illustrated in FIG. 8, the chip-type capacitor component 17 is assembled by bonding the first chip capacitor 31, which is one chip capacitor, and the second chip capacitor 32, which is the other chip capacitor, in series. At this time, the cream solder having a high melting point similar to that of the first embodiment is used as a bonding material for bonding the electrodes 31b and 32a of the chip capacitors 31 and 32. Three or more chip capacitors may be connected in series to assemble the chip-type capacitor component. In the second embodiment, in the step (1), a plurality of (for example, four) chip-type capacitor components 17 for parallel connection between the bus bar 12 and the mounting plate body 16 are assembled.

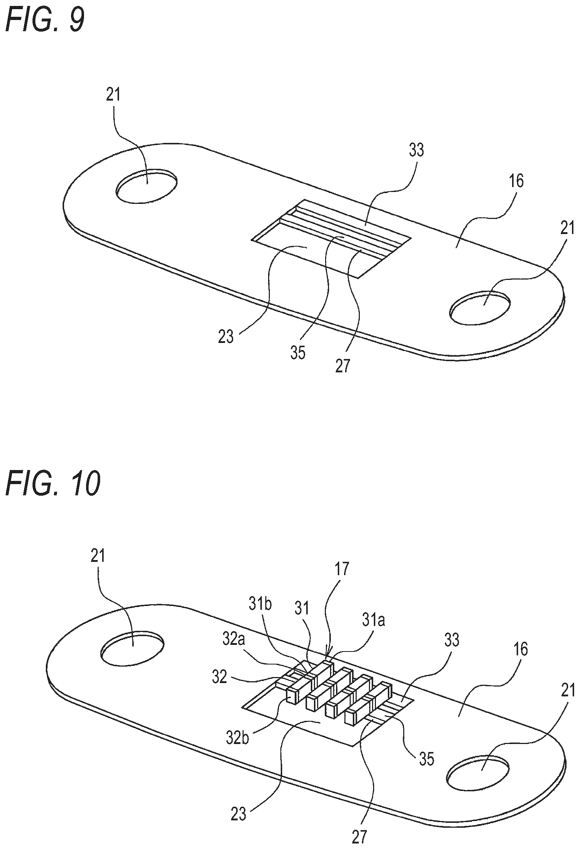

In the next step (2), as illustrated in FIG. 9, the cream solder having a high melting point similar to that of the first embodiment is applied to the capacitor bonding region 33 of the mounting plate body 16 by a dispenser or the like. In the second embodiment, a coupling portion 27 extending parallel to the capacitor bonding region 33 is integrally formed with the mounting plate body 16 in the insertion hole 23 of the mounting plate body 16, and the cream solder is also applied to an upper surface of this coupling portion 27 to be used as a capacitor bonding region 35. The coupling portion 27 also serves to fix the plurality of chip-type capacitor components 17.

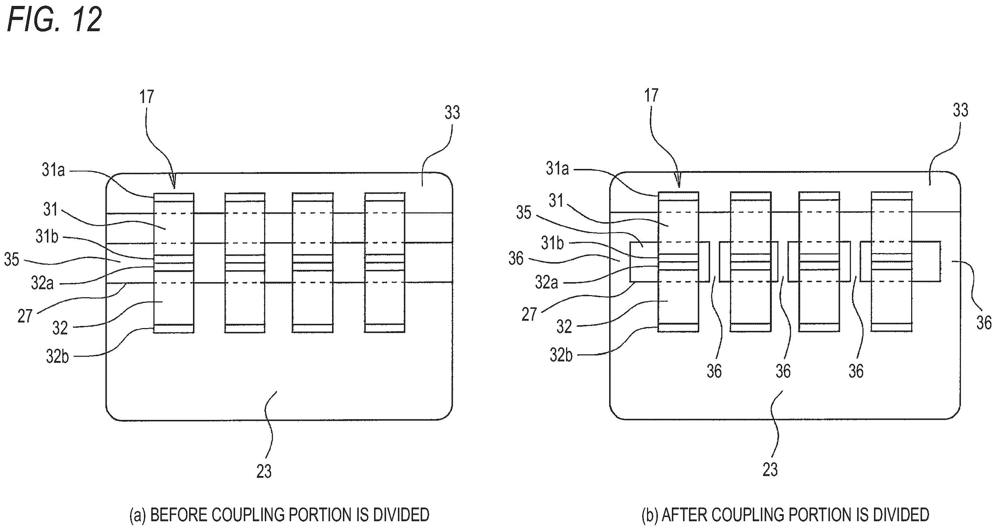

In the next step (3), as illustrated in FIGS. 10 and (a) of FIG. 12, one surface of the chip-type capacitor component 17 is mounted on the capacitor bonding regions 33 and 35 of the mounting plate body 16 using a component mounting machine or the like. At this time, a portion of the chip-type capacitor component 17 including the one electrode 31a on the one surface of the first chip capacitor 31 is mounted in the capacitor bonding region 33 of the mounting plate body 16, and a portion thereof including the other electrode 31b on the one surface of the first chip capacitor 31 and a portion thereof including the one electrode 32a on the one surface of the second chip capacitor 32 are mounted in the capacitor bonding region 35 of the coupling portion 27. In the second embodiment, the plurality of (for example, four) chip-type capacitor components 17 are mounted in parallel. At this time, in order to prevent adjacent chip-type capacitor components 17 from coming into contact with each other, the plurality of chip-type capacitor components 17 may be mounted using a jig (not illustrated) for ensuring a gap between the adjacent chip-type capacitor components 17.

In the next step (4), the cream solder in the mounting portion of the chip-type capacitor component 17 is heated by hot air, laser, or the like and reflowed, and a portion on one surface of the chip-type capacitor component 17 including the electrodes 31a, 31b, and 32a is bonded to the mounting plate body 16 and the coupling portion 27. Thus, the electrode 31a is electrically connected to the mounting plate body 16, and the electrodes 31b and 32a are fixed to the coupling portion 27.

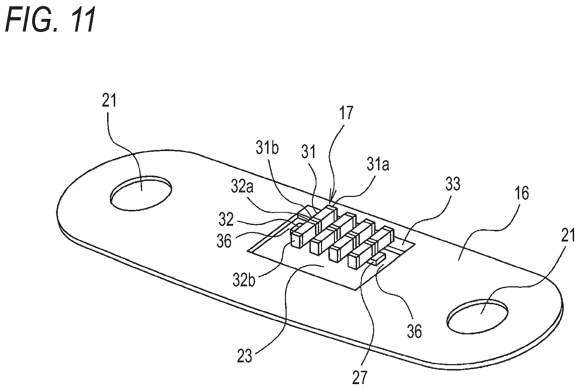

In the next step (5), as illustrated in FIGS. 11 and (b) of FIG. 12, both end portions of the coupling portion 27 of the mounting plate body 16 and a space between the adjacent chip-type capacitor components 17 (portions where the chip-type capacitor components 17 are not bonded) are partially cut off to form an insulating gap 36, the coupling portion 27 is insulated from the mounting plate body 16, and the two electrodes 31a and 31b of the first chip capacitor 31 of the chip-type capacitor component 17 and the adjacent chip-type capacitor components 17 are insulated from each other. If the coupling portion 27 is made of an insulating material in the mounting plate body 16, it is possible to omit a step of cutting off and insulating both end portions of the coupling portion 27 and the adjacent chip-type capacitor components 17.

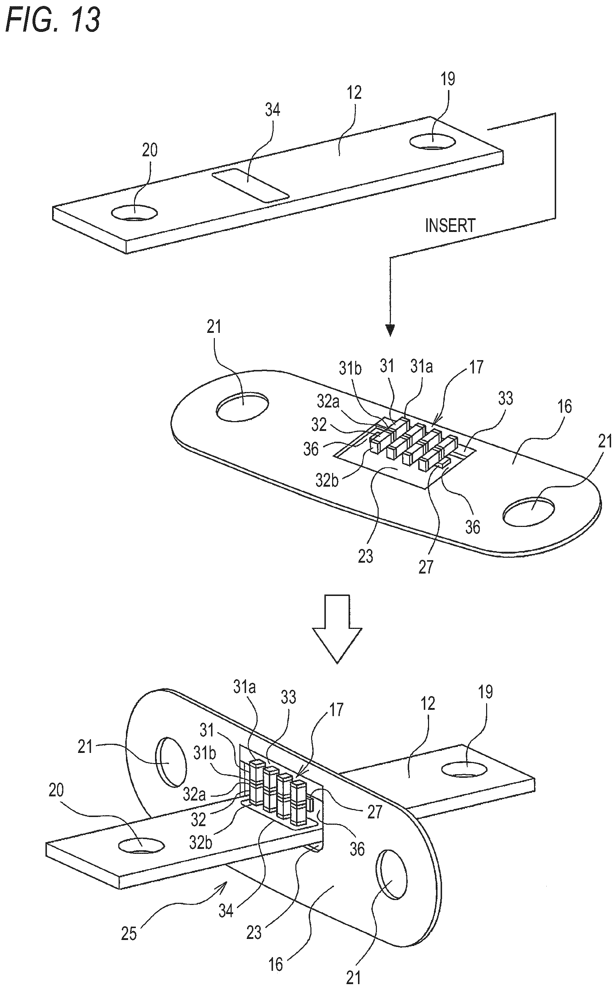

In the next step (6), as illustrated in FIG. 13, the cream solder having a high melting point similar to that of the first embodiment is applied by a dispenser or the like to the capacitor bonding region 34 of the bus bar 12 as a bonding material for bonding the chip-type capacitor components 17.

In the next assembly step (7), the bus bar 12 is inserted into the insertion hole 23 of the mounting plate body 16, and the other (not connected) electrodes 32b of the second chip capacitors 32, which are the other surfaces of the plurality of chip-type capacitor components 17, are brought into a state of abutting against the capacitor bonding region 34 of the bus bar 12. In this state, the cream solder application portion of the capacitor bonding region 34 of the bus bar 12 is heated by hot air, laser, or the like and reflowed, and the other electrodes 32b of the plurality of chip-type capacitor components 17 are bonded to the capacitor bonding region 34 of the bus bar 12 to assemble the assembly 25. Thus, the plurality of chip-type capacitor components 17 are connected in parallel between the bus bar 12 and the mounting plate body 16.

Thereafter, the process proceeds to the molding step (8), the assembly 25 is set in the molding mold (not illustrated), and a molding material of a high thermal conductive resin (for example, a PPS resin, a PA resin, a PBT resin, or a PC resin having high thermal conductivity) is injected into the mold to injection-mold the molded resin portion 18. Before injection molding of the molded resin portion 18, a bolt (not illustrated) may be mounted into the bolt insertion hole 20 of the bus bar 12, and then the molded resin portion 18 may be injection-molded.

Also in the second embodiment described above, effects similar to those of the first embodiment can be obtained.

In the second embodiment, after the one surface of the chip-type capacitor component 17 is bonded to the mounting plate body 16, the bus bar 12 is inserted into the insertion hole 23 of the mounting plate body 16, and the other surface of the chip-type capacitor component 17 is bonded to the bus bar 12 to assemble the assembly 25, but a bonding order of the one surface and the other surface of the chip-type capacitor component 17 may be reversed, and after the other surface of the chip-type capacitor component 17 is bonded to the bus bar 12, the bus bar 12 may be inserted into the insertion hole 23 of the mounting plate body 16 and the one surface of the chip-type capacitor component 17 may be bonded to the mounting plate body 16 to assemble the assembly 25.

When the chip-type capacitor component 17 is composed of only one chip capacitor, the steps (2) to (9) may be performed without the step (1) of bonding the plurality of chip capacitors in series and assembling the chip-type capacitor component 17. Also in this case, the bonding order of the one surface and the other surface of the chip-type capacitor component 17 (chip capacitor) may be reversed.

### THIRD EMBODIMENT

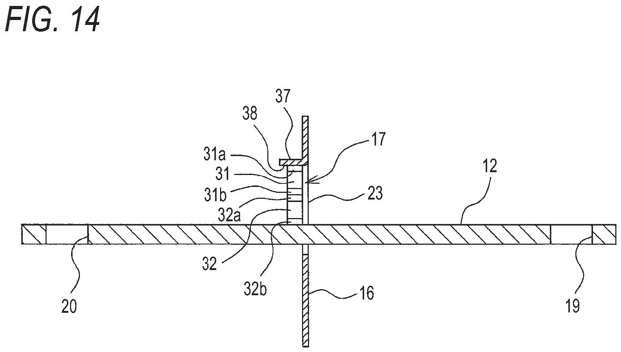

Next, a third embodiment according to the present invention will be described with reference to FIG. 14. However, substantially the same portions as those of the first embodiment are denoted by the same reference numerals, and the description thereof will be simplified or omitted, and different portions will be mainly described.

In the third embodiment, a cut and raised piece portion 37 is formed by cutting and raising a part of a portion of the mounting plate body 16 adjacent to the insertion hole 23 at a right angle, a lower surface (surface on the insertion hole 23 side) of the cut and raised piece portion 37 is defined as a capacitor bonding region 38, and the one electrode 31a, which is the one surface of the chip-type capacitor component 17, is bonded to the capacitor bonding region 38 to electrically connect the electrode 31a to the mounting plate body 16. The capacitor bonding region 38 of the cut and raised piece portion 37 may also be formed in a shape (for example, a concave shape) that allows positioning of the bonding position of the electrode 31a of the chip-type capacitor component 17 or identification of an application range of solder. The other configurations are the same as those of the first embodiment, and a manufacturing method may be any one of the manufacturing methods described in the first and second embodiments.

Also in the third embodiment described above, effects similar to those of the first embodiment can be obtained.

### FOURTH EMBODIMENT

The manufacturing method described in the above 1 and 2 is a manufacturing method when the assembly 25 is assembled by a manufacturer who injection-molds the molded resin portion 18. On the other hand, in the fourth embodiment according to the present invention, the manufacturer who injects-molds the molded resin portion 18 acquires the assembly 25 assembled by another manufacturer by any one of the methods according to the first to third embodiments (preparation step), and sets the assembly 25 in a molding mold to injection-mold the molded resin portion 18 (molding step).

### [Other Embodiments]

In the first to third embodiments, the cream solder is used as a bonding material for bonding the chip-type capacitor component 17 to the mounting plate body 16 and the bus bar 12, or bonding the electrodes 31b and 32a of the two chip capacitors 31 and 32 to each other, but other solder, such as resin-containing solder, may be used, or soldering may be performed using a soldering iron. Alternatively, using the cream solder and other solder together, for example, the chip-type capacitor component 17 may be bonded to the mounting plate body 16 and the bus bar 12 with the cream solder, and the electrodes 31b and 32a of the two chip capacitors 31 and 32 may be bonded to each other by other solder.

Alternatively, instead of the solder, a conductive adhesive may be used as a bonding material, the chip-type capacitor component 17 may be bonded to the mounting plate body 16 and the bus bar 12 with the conductive adhesive, or a plurality of chip capacitors 31 and 32 may be connected in series with a conductive adhesive to form the chip-type capacitor components 17. Alternatively, the soldering and the adhesive may be used in combination, and for example, the electrodes may be soldered, and the surfaces other than the electrodes may be bonded with an adhesive.

In the first to third embodiments, the high thermal conductive resin is used as the resin for molding the molded resin portion 18, but resins other than the high thermal conductive resin may be used as long as the desired product performance can be obtained.

The present invention is not limited to the above-described embodiments, and various changes can be made without departing from the scope of the invention, for example, the shape of the mounting plate body 16 or the bus bar 12 may be changed, the shape of the molded resin portion 18 may be changed, or the like.

### REFERENCE SIGNS LIST

10: terminal block
11: electric component case
12: bus bar
13: through hole
16: mounting plate body
17: chip-type capacitor component
18: molded resin portion
21: mounting hole
23: insertion hole
25: assembly
27: coupling portion
31: first chip capacitor (one chip capacitor)
31a, 31b: electrode
32: second chip capacitor (the other chip capacitor)
32a, 32b: electrode
33, 34, 35: capacitor bonding region
37: cut and raised piece portion
38: capacitor bonding region

## Claims

1. A terminal block configured to be attached to an electric component case, the terminal block comprising:
a bus bar having a plate shape, the bus bar being configured to be inserted into a through hole formed in the electric component case and to be electrically connected to an electric component stored in the electric component case;
a conductive mounting plate body formed with an insertion hole into which the bus bar is inserted, the conductive mounting plate body being configured to close the through hole of the electric component case when the terminal block is attached to the electric component case; and
at least one chip-type capacitor component electrically connected between the bus bar and the mounting plate body,
wherein one surface and another surface of the chip-type capacitor component are bonded to the mounting plate body and the bus bar, respectively, and
wherein a molded resin portion is provided, the molded resin portion being configured to cover at least a part of each of the bus bar, the mounting plate body, and the chip-type capacitor component, in a state in which the bus bar is inserted into the insertion hole of the mounting plate body.

2. The terminal block according to claim 1,
wherein the chip-type capacitor component is formed by bonding two or more chip capacitors in series, one surface of one chip capacitor is bonded to the mounting plate body, and another surface of another chip capacitor is bonded to the bus bar.

3. The terminal block according to claim 1 or 2,
wherein a plurality of the chip-type capacitor components are provided, and
wherein the plurality of chip-type capacitor components are connected in parallel between the bus bar and the mounting plate body.

4. The terminal block according to any one of claims 1 to 3,
wherein a mounting hole for attaching the terminal block to the electric component case is formed in the mounting plate body.

5. The terminal block according to any one of claims 1 to 4,
wherein the molded resin portion is made of a high thermal conductive resin.

6. A terminal block manufacturing method for manufacturing the terminal block according to any one of claims 1 to 5, the terminal block manufacturing method comprising:
a preparation step of preparing an assembly in which the bus bar is inserted into the insertion hole of the mounting plate body, the chip-type capacitor component is electrically connected between the bus bar and the mounting plate body, and the one surface and the another surface of the chip-type capacitor component are bonded to the mounting plate body and the bus bar, respectively; and
a molding step of molding the molded resin portion by setting the assembly in a molding mold.

7. A terminal block manufacturing method for manufacturing the terminal block according to any one of claims 1 to 5, the terminal block manufacturing method comprising:
a step of bonding the one surface of the chip-type capacitor component to the mounting plate body to electrically connect one electrode of the chip-type capacitor component to the mounting plate body;
a step of assembling an assembly by inserting the bus bar into the insertion hole of the bus bar and bonding the another surface of the chip-type capacitor component to the bus bar to electrically connect another electrode of the chip-type capacitor component to the bus bar; and
a molding step of molding the molded resin portion by setting the assembly in a molding mold.

8. A terminal block manufacturing method for manufacturing the terminal block according to any one of claims 1 to 5, the terminal block manufacturing method comprising:
a step of bonding the another surface of the chip-type capacitor component to the bus bar to electrically connect another electrode of the chip-type capacitor component to the bus bar;
a step of assembling an assembly by inserting the bus bar into the insertion hole of the mounting plate body and bonding the one surface of the chip-type capacitor component to the mounting plate body to electrically connect one electrode of the chip-type capacitor component to the mounting plate body; and
a molding step of molding the molded resin portion by setting the assembly in a molding mold.

9. A terminal block manufacturing method for manufacturing the terminal block according to claim 2, the terminal block manufacturing method comprising:
a step of bonding the one surface of the one chip capacitor to the mounting plate body to electrically connect one electrode of the one chip capacitor to the mounting plate body;
a step of bonding the another surface of the another chip capacitor to the bus bar to electrically connect another electrode of the another chip capacitor to the bus bar;
a step of assembling an assembly by inserting the bus bar into the insertion hole of the mounting plate body and bonding the another electrode of the one chip capacitor and one electrode of the another chip capacitor with the two electrodes facing each other; and
a molding step of molding the molded resin portion by setting the assembly in a molding mold.

10. A terminal block manufacturing method for manufacturing the terminal block according to claim 2, the terminal block manufacturing method comprising:
a step of assembling the chip-type capacitor component by bonding the two or more chip capacitors in series;
a step of bonding the one surface of the chip-type capacitor component to the mounting plate body to electrically connect one electrode of the chip-type capacitor component to the mounting plate body;
a step of assembling an assembly by inserting the bus bar into the insertion hole of the mounting plate body and bonding the another surface of the chip-type capacitor component to the bus bar to electrically connect another electrode of the chip-type capacitor component to the bus bar; and
a molding step of molding the molded resin portion by setting the assembly in a molding mold.

11. A terminal block manufacturing method for manufacturing the terminal block according to claim 2, the terminal block manufacturing method comprising:
a step of assembling the chip-type capacitor component by bonding the two or more chip capacitors in series;
a step of bonding the another surface of the chip-type capacitor component to the bus bar to electrically connect another electrode of the chip-type capacitor component to the bus bar;
a step of assembling an assembly by inserting the bus bar into the insertion hole of the mounting plate body and bonding the one surface of the chip-type capacitor component to the mounting plate body to electrically connect one electrode of the chip-type capacitor component to the mounting plate body; and
a molding step of molding the molded resin portion by setting the assembly into a molding mold.

12. The terminal block manufacturing method according to any one of claims 6 to 11,
wherein solder having a melting point of 200°C or higher is used as a bonding material for bonding the chip-type capacitor component to the bus bar and the mounting plate body.
